# EUROPÄISCHE PATENTSCHRIFT

(11) **EP 2 265 834 B1**
(45) Veröffentlichungstag und Bekanntmachung des Hinweises auf die Patenterteilung: **15.10.2014**
(21) Anmeldenummer: 09733433.8
(22) Anmeldetag: 03.04.2009
(51) Int. Cl.: F16C 33/54

(54) **KÄFIG FÜR EIN WÄLZLAGER**
CAGE FOR A ROLLING ELEMENT BEARING
CAGE D'UN PALIER DE ROULEMENT

(30) Priorität: 10.07.2008 DE 102008032662; 02.07.2008 DE 102008030917; 15.04.2008 DE 102008018775
(43) Veröffentlichungstag der Anmeldung: 29.12.2010
(73) Patentinhaber: Schaeffler Technologies GmbH & Co. KG, 91074 Herzogenaurach (DE)
(72) Erfinder: BROMMER, Christian, 97421 Schweinfurt (DE); BRÜCKNER, Rudolf, 91086 Aurachtal (DE); MICHOS, Gordana, 97532 Üchtelhausen (DE); RUPPRECHT, Walter, 91462 Dachsbach (DE); SCHMEIKO, Harry, 91085 Weisendorf (DE)
(86) Internationale Anmeldenummer: PCT/DE2009/000457
(87) Internationale Veröffentlichungsnummer: WO 2009/127191

(56) Entgegenhaltungen:
- EP-A2- 1 378 676
- EP-B1- 1 042 619
- WO-A1-2009/087957
- DE-A1- 10 354 684
- DE-A1-102006 045 436
- DE-B- 1 286 346
- DE-C- 919 977
- GB-A- 913 144
- US-A- 1 100 179
- US-A- 1 935 110
- US-B1- 6 666 585

## Beschreibung

Die Erfindung betrifft einen Käfig nach dem Oberbegriff von Anspruch 1 für Wälzkörper eines Wälzlagers.

Derartige Käfige sind aus der Praxis bzw. aus der EP 1 262 256 B1 bekannt und zeichnen sich dadurch aus, dass die Wälzkörper, meist Zylinderrollen, zwischen dem mittleren Stegteil und den beiden an die Seitenringe angrenzende Stegtelle eingefedert werden, so dass der Käfig als mit Wälzkörpern bestückter selbsthaltender Käfig gefertigt werden kann. Dabei liegen die Wälzkörper an Führungsflächen an den beiden an die Seitenringe angrenzende Stegteile ausserhalb des Teilkreises und an dem mittleren Stegteil innerhalb des Teilkreises an. Das Korpus des Käfigs wird dabei üblicherweise aus Blech hergestellt, wobei der radial abgestellte mittlere Stegteil durch ein Umformverfahren hergestellt wird. Bei diesem Umformverfahren ist zu beachten, dass die Breite des mittleren Stegteils nicht kleiner sein sollte als die Dicke des Blechs, das umgeformt wird, so dass das mittlere Stegteil in einer tangentialen Schnittebene, beispielsweise entlang des Teilkreises, einen im allgemeinen quadratischen Querschnitt aufweist. Diese Käfige sind zwar einfach herzustellen, bereiten jedoch Schwierigkeiten bei hohen Tragzahlen und hohen Drehzahlen, weil die zylindrischen Wälzkörper an Führungsflächen für die Wälzkörper im Bereich der an die Seitenringe angrenzenden Stegteile und damit ausserhalb des Teilkreises angeordnet sind. Im Betrieb treten dabei insbesondere bei Beschleunigung des Käfigs auch tangentiale Kräfte auf, die an den Stegteilen in den Käfig eingeleitet werden. Dabei treten Kräfte auf, die die Tendenz haben, die Stege radial nach aussen und die Seitenringe voneinander weg zu drücken, so dass die Wälzkörper nicht mehr definiert gehalten werden können und der Käfig insgesamt versagt.

### Aufgabe der Erfindung

Es ist die Aufgabe der Erfindung, den eingangs genannten Käfig derart auszubilden, dass dieser höheren mechanischen Belastungen standhalten kann.

### Zusammenfassung der Erfindung

Diese Aufgabe wird erfindungsgemäß durch einen Käfig mit den Merkmalen des Anspruchs 1 gelöst.

Die durch das Stützelement verstärkten und gegeneinander abgestützten ersten und zweiten Stegteile können die einwirkenden Kräfte besser aufnehmen. Es bleibt damit immer noch möglich, den Käfig mit dem mittleren Stegteil nach dem bekannten Umformverfahren aus einem dünnen Blech zu fertigen, wobei die Dicke des Bleches als der für die Durchführbarkeit des Umformverfahrens begrenzende Faktor unverändert bleibt. Insbesondere ist keine konstruktive Änderung des Käfigs selbst erforderlich, sondern es ist ausreichend, einen einmal gefertigten Käfig nachträglich mit dem Stützelement zu versehen.

Bei der Krafteinleitung verbiegen sich die beiden Stegteile und damit der Steg insgesamt nicht mehr radial nach aussen. Weil das Stützelement die beiden Seitenringe verbindet, wird der bei Krafteinleitung weiter auftretenden Tendenz, den Abstand der Seitenringe zu verändern, entgegengewirkt.

Vorteilhaft ist weiter anzusehen, dass der zwischen dem mittleren Stegteil und dem Stützelement gebildete Raum einen Fettvorrat aufnehmen kann, so dass der Käfig bei der erstmaligen Inbetriebnahme eine ausreichende Schmierung erfährt.

Vorzugsweise ist vorgesehen, dass das Stützelement mindestens abschnittsweise parallel zu dem mittleren Stegteil ausgerichtet ist. Damit lässt sich mindestens eine Stützelement des Käfigs als der gekrümmten Außenkontur des Käfigs angepasster Zylinderabschnitt ausgestalten. Das Stütz-element kann in der Verlängerung der beiden an die Seitenringe angrenzenden Stegteile angeordnet und an den beiden Stegteilen befestigt sein. Damit schließt das Stützelement bündig mit der Außenkontur des übrigen Käfigs ab. Alternativ hierzu kann vorgesehen sein, dass das Stützelement an den beiden ersten und zweiten Stegteilen befestigt oder an der äußeren Mantelfläche der beiden Seitenringe befestigt ist. In diesem Fall steht das Stütz-element über die Außenkontur des Käfigs vor; dabei kann die radial nach außen weisende Seite des Stützelement eine ein Gleiten des Käfigs erleichternde Beschichtung aufweisen.

Vorzugsweise ist vorgesehen, dass eine Breite des Stützelement in dem Bereich zwischen den beiden Stegteilen größer ist als die Breite des mittleren Stegteils. Da das Stützelement bei seiner Herstellung nicht den Beschränkungen des Umformprozesses unterliegt wie der übrige Käfig, kann die Breite des Stützelement so gewählt werden, dass die in den Taschen aufgenommenen Wälzkörper das Stützelement nicht mehr berühren und nur an den durch das Stützelement verstärkten ersten und zweiten Stegteilen geführt bleiben. Ein Stützelement mit in einer tangentialen Schnittebene auf der Höhe des Teilkreises rechteckigen, nicht mehr quadratischen Querschnitt stellt eine besonders stabile Verbindung zwischen den beiden Seitenringen dar.

Vorzugsweise ist vorgesehen, dass das Stützelement mittels einer Umbördelung an einem der Seitenringe festgelegt ist. Die Umbördelung kann entweder durch eine Umlegung eines Randabschnittes des Stützelementes auf den Seitenring bzw. auf eines der Stegteile oder durch eine Umlegung eines Randabschnittes eines der Stegtelle bzw. des Seitenrings auf das Stützelement ausgebildet sein. Eine derartige Umbördelung ist einfach zu erzielen und bietet eine im wesentlichen linienhafte Festlegung des Stützelementes an dem Seitenring bzw. an dem Stegteil, die im Bereich des Stützelementes, bzw. im Bereich des Stegteils durch die Wälzkörper eingeleitete Kräfte besser aufnehmen kann als eine nur punktförmige Befestigung des Stützelementes an dem Seitenring.

Vorzugsweise ist vorgesehen, dass das Stützelement mittels einer Schweißung, insbesondere mittels einer Punktschweißung, an mindestens einem der beiden Stegteile festgelegt ist. Die Schweißung, speziell die Punktschweißung, Im Bereich der Stegtelle stellt sicher, dass die Fügung zwischen dem Stegteil und dem Stützelement im wesentlichen in der Wirkrichtung der Kräfte angeordnet ist, die die Wälzkörper auf den Verbund aus dem Stegteil und dem Stützelement übertragen. Wird das Stützelement außerhalb der Stegteile mittels einer insbesondere punktförmigen Fügemethode, speziell einer Punktschweißung, an dem Seitenring befestigt, bewirken die von den Wälzkörpern auf den Käfig übertragenen Kräfte ein Drehmoment um den Fügepunkt, die die Befestigung des Stützelementes an dem Seitenringe stark beanspruchen und bei hoher Last leicht lösen können.

Es versteht sich, dass eine Schweißung, insbesondere eine Punktschweiβung, auch ergänzend oder alternativ zu der Umbördelung als Fügemethode vorgesehen sein kann.

Vorzugsweise ist vorgesehen, dass das Stützelement mittels einer Verprägung an dem Seitenring festgelegt ist. Die Verprägung kann alternativ oder ergänzend zu der Schweißung, insbesondere der Punktschweißung, und der Umbördelung vorgesehen sein. Die Verprägung stellt dabei eine mindestens abschnittsweise flächige, annähernd formschlüssige Verbindung zwischen dem Stützelement und dem Seitenring, insbesondere auch im Bereich der Stegteile, dar, die einfach auszubilden ist, insbesondere als Verstemmung unter Ausbildung zweier an dem Stützelement und dem Seitenring ausgebildeten, zueinander ausgerichteten Sicken, oder als Clinchniet.

Vorzugsweise ist vorgesehen, dass im Bereich der Stegteile Anlaufflächen vorgesehen sind. Die Anlaufflächen können als einfache abgeschrägte Abschnitte ausgebildet sein oder eine Formgebung aufweisen, die im wesentlichen auf die Form der in den Taschen aufgenommenen Wälzkörper abgestimmt ist; beispielsweise können die Anlaufflächen eine zu der Form der Wälzkörper komplementäre Kontur aufweisen. Die Anlaufflächen vermindern die Reibung zwischen den Wälzkörpern und dem Käfig und ermöglichen eine definierte Krafteinleitung zwischen den Wälzkörpern und dem Käfig im Bereich der Stege.

Vorzugsweise ist vorgesehen, dass im Bereich des Stützelementes Anlaufflächen vorgesehen sind. Hierbei tritt eine nur indirekte Krafteinleitung der Wälzkörper auf den Käfig auf, unter Zwischenschaltung des Stützelementes. Der Käfig übernimmt dabei die Funktion der Aufnahme und Halterung der Wälzkörper, während das Stützelement die Aufnahme der von dem Wälzkörpern im Betrieb eingeleiteten Kräfte übernimmt.

Es versteht sich, dass Anlaufflächen sowohl an den Stegen als auch an dem Stützelement vorgesehen sein können. Die Anlaufflächen können so aufeinander abgestimmt sein, dass die Anlaufflächen von Stegteil und Stützelement eine gemeinsame, große Anlauffläche bilden, oder so, dass nur eine der beiden Anlaufflächen die Krafteinleitung im Betriebsfall über nimmt und die andere Anlauffläche nur bei Ausfall der ersten Anlauffläche wirksam wird, so dass eine Notlauffunktion erfüllt werden kann.

Vorzugsweise ist vorgesehen, dass der Käfig mindestens zwei Stützelemente umfasst, und dass je zwei benachbarte Stützelemente zu einem Rahmen zusammengefasst sind, der eine Tasche umgibt. Die Stützelemente sind Bestandteile des Rahmens, der zusätzlich noch Verbindungselemente zwischen den Stützelemente umfasst. Die Verbindungselemente können dann an der äußeren Mantelfläche der beiden Stützringe angeordnet werden. Derartige Rahmen lassen sich leicht durch Stanzen eines Fensters in einen Blechzuschnitt herstellen. Der Rahmen wird dann derart an dem Käfig befestigt, dass das Fenster des Rahmens über der Tasche des Käfigs liegt. Es kann insbesondere vorgesehen sein, dass jede zweite Tasche des Käfigs von einem Rahmen umgeben, um eine mechanische Stützung des Käfigs insgesamt zu ermöglichen.

Alternativ zu der Zusammenfassung von zwei oder mehr Stützelementen zu einem oder mehreren Rahmen ist vorzugsweise vorgesehen, dass jeder der Stege des Käfigs ein Stützelement umfasst, und dass die Stützelemente zu einem den Käfig umgebenden Stützkäfig zusammenfasst sind, dessen jeweiliges Fenster einer der Taschen des Käfigs zugeordnet ist. Der Stützkäfig kann aus den einzelnen Stützelemente derartig hervorgehen, dass je zwei benachbarte Stützelemente mittels mindestens einem Verbindungselement, das an der äußeren Mantelfläche des Seitenrings angeordnet ist, verbunden werden, so dass sich eine den Käfig umlaufende, käfigartige Vorrichtung ergibt. Zwischen je zwei Stützelementen des Stützkäfigs wird ein Fenster ausgebildet, zwischen dem die Wälzkörper angeordnet sind, ohne Kontakt zu den Stützelementen auszubilden. Jedes Fenster des Stützkäfigs entspricht dabei einer Tasche des Käfigs. Ein derartiger Stützkäfig lässt sich schnell und einfach aus einem Blechzuschnitt durch Ausstanzen der Fenster und anschließendes Biegen des Blechzuschnitts herstellen. Insbesondere unterbleibt bei der Herstellung des Stützkäfigs ein Umformschritt, bei dem sich die Materialdicke ändert, so dass sich Stützkäfige beliebiger Dicke herstellen lassen.

Sind die Stützelementes zu einem Rahmen oder einem Stützkäfig ausgebildet, können der Rahmen bzw. der Stützkäfig mittels einer randseitigen Umbördelung an dem Käfig festgelegt werden, bzw. mittels einer Schweißung, speziell einer Punktschweißung im Bereich der Stegteile des Rahmens bzw. des Stützkäfigs, oder mittels einer Verprägung. Soll der Rahmen bzw. der Stützkäfig mittels der Umbördelung an dem Käfig festgelegt werden, kann die Umbördelung nur abschnittsweise ausgebildet sein, beispielsweise derart, dass an der randseitigen Kante des Rahmens bzw. des Stützkäfigs Laschen oder Zungen freigeschnitten werden, die umgelegt werden.

Sind die Stützelemente zu einem Rahmen oder insbesondere zu einem Stützkäfig zusammengefasst, kann vorgesehen sein, dass an dem Rahmen bzw. an dem Stützkäfig Anlaufflächen vorgesehen sein, an denen der Kontakt mit den in dem Taschen befindlichen Wälzkörpern stattfindet. Der Rahmen bzw. der Stützkäfig nimmt dabei die von den Wälzkörpern eingeleiteten Kräfte aus, während der Käfig nur die Wälzkörper selbst aufnimmt bzw. lagert. Damit werden in den Käfig selbst nur wenige Kräfte eingeleitet, so dass der Käfig leichtbauend ausgestaltet sein kann und der Käfig für die Wälzkörper selbsthaltend ausgebildet werden kann. Insbesondere kann der Käfig mit Wälzkörpern bestückt werden, ohne eine Hilfseinrichtung zum Halten der Wälzkörper in dem Käfig zu erfordern, Insbesondere können im Bereich der mittleren Abschnitte Haltepunkte vorgesehen sein, die die in die Taschen eingeführten Wälzkörper an einem Herausfallen aus den Taschen hindern, bevor der Käfig in das Lager eingeführt wird.

Vorzugsweise ist hinsichtlich der Ausbildung des Stützkäfigs vorgesehen, dass ein axialer Abstand zwischen den gegenüberliegenden Kanten des

Fensters des Stützkäfigs geringer ist als ein axialer Abstand zwischen dem ersten und dem zweiten Seitenring im Bereich der Taschen. Dies ermöglicht die axiale Führung der Wälzkörper an dem Stützkäfig, der in axialer Richtung ein Untermaß gegenüber der zugeordneten Tasche des Käfigs aufweist, so dass der Käfig selbst entlastet wird. Weiter erweist sich in fertigungstechnischer Hinsicht von Vorteil, dass bei der Herstellung der Fenster des Stützkäfigs deren Abmessungen bei einem Stanzen leicht einstellbar ist, während die axiale Abmessung der Taschen des Käfigs nur mit einem hohen Aufwand vorher einstellbar ist, da die Taschen des Käfigs über einen Umformprozess hergestellt werden, der mit einem Materialfluss verbunden ist.

Vorzugsweise ist vorgesehen, dass das Stützelement, insbesondere der Rahmen oder der Stützkäfig, aus einem faserverstärkten Kunststoff ausgebildet ist. Da das Stützelement keinem Kontakt mit den Wälzkörpern unterliegt, ist es ausreichend, wenn das Stützelement aus einem mechanisch stabilen, allerdings nicht verschleißbeständigen Werkstoff hergestellt ist, der ein geringes spezifisches Gewicht aufweist. Es versteht sich, dass nicht nur das Stützelement selbst, sondern auch der Rahmen bzw. Stützkäfig insgesamt aus dem faserverstärkten Kunststoff hergestellt sein kann. Alternativ hierzu kann das Stützelement bzw. der Rahmen oder Stützkäfig aus einem Metall, insbesondere auch einem Leichtmetall, hergestellt sein.

Bei der Ausbildung des Stützkäfigs ist vorzugsweise vorgesehen, dass eine Materialdicke der Seitenringe und eine Materialdicke des Stützkäfigs derart aufeinander abgestimmt sind, dass der Stützkäfig eine Außen- oder Innenbordführung des Käfigs ermöglicht.

Alternativ hierzu ist vorzugsweise vorgesehen, dass an der äußeren Mantelfläche des Stützkäfigs abschnittsweise eine ein Gleiten des Stützkäfigs erleichternde Hilfe vorgesehen ist. Eine derartige Hilfe kann eine mindestens abschnittsweise an der äußeren Mantelfläche des Stützkäfigs vorgesehene Beschichtung oder angebrachte Gleitpads oder Gleitschuhe umfassen, wobei die Beschichtung beispielsweise aus metallischen Werkstoffen wie Stahl oder Messing oder aus Sinterwerkstoffen oder aus Kunststoffen bestehen kann. Es ist ebenfalls möglich, metallisch beschichtete Kunststoffe als Hilfe für das Gleiten des Stützkäfigs vorzusehen.

Der Käfig sowie der diesen umgebende Stützkäfig sind vorzugsweise als Blechblegeteile bzw. als gestanzter Blechzuschnitt ausgebildet, entweder aus einem carbonitrierten Blechmaterial oder mit einer carbonitrierten Oberfläche versehenen Blech.

Die Stützelement können durch Punkt-, Linien- oder andere Schweißverfahren, durch Löten, Kleben, Aufschrumpfen, Durchsetzfügen, Bördeln, Nieten oder andere Fügeverfahren an den Käfig angebracht werden. Insbesondere besteht hinsichtlich der form-, stoff- oder reibschlüssigen Fügung des Stützelementes an den Käfig ein vorteilhaft fertigungstechnisch zu nutzender Freiheitsgrad.

Entsprechendes gilt, wenn die Stützelemente in dem Rahmen bzw. in dem Stützkäfig aufgenommen sind; hierbei kann der Rahmen bzw. der Stützkäfig auch außerhalb der Stützelemente, beispielsweise im Bereich der die Stützelemente verbindenden Verbindungselemente, an dem Käfig befestigt werden. Ist ein Stützkäfig vorgesehen, kann auf eine Befestigung des Stützkäfigs an dem Käfig verzichtet werden, weil der Käfig bei mechanischer Beanspruchung gegen den Stützkäfig gedrückt wird und dabei eine mindestens reibschlüssige Verbindung zwischen dem Käfig und dem Stützkäfig erzielt wird. Eine lagerichtige Zuordnung der Stützelemente des Stützkäfigs zu den Stegen des Käfigs wird bei der Montage durch die Forderung sichergestellt, dass jeder Wälzkörper in einer der Taschen des Käfigs auch das der Tasche des Käfigs zugeordnete Fenster des Stützkäfigs abschnittsweise durchsetzt.

Weitere Vorteile und Merkmale der Erfindung ergeben sich aus der Beschreibung der Ausführungsbeispiele sowie aus den abhängigen Ansprüchen.

Die Erfindung wird im folgenden unter Bezugnahme auf die anliegenden Zeichnungen näher beschrieben und erläutert.

### Kurze Beschreibung der Zeichnungen

- Fig. 1: zeigt ausschnittsweise eine Schnittansicht eines ersten Ausführungsbeispiels eines erfindungsgemäßen Käfigs,
- Fig. 2: zeigt ausschnittsweise eine Schnittansicht eines zweiten Ausführungsbeispiels eines erfindungsgemäßen Käfigs,
- Fig. 3: zeigt ausschnittsweise eine weitere Schnittansicht des zweiten Ausführungsbeispiels aus Fig. 2,
- Fig. 4: zeigt ausschnittsweise eine Schnittansicht eines dritten Ausführungsbeispiels eines erfindungsgemäßen Käfigs,
- Fig. 5: zeigt ausschnittsweise eine Schnittansicht eines vierten Ausführungsbeispiels eines erfindungsgemäßen Käfigs,
- Fig. 6: zeigt ausschnittsweise eine Draufsicht auf ein fünftes Ausführungsbeispiel eines erfindungsgemäßen Käfigs, und
- Fig. 7: zeigt eine teilweise geschnittene Ansicht eines sechsten Ausführungsbeispiels eines erfindungsgemäßen Käfigs.

### Detaillierte Beschreibung der Zeichnung

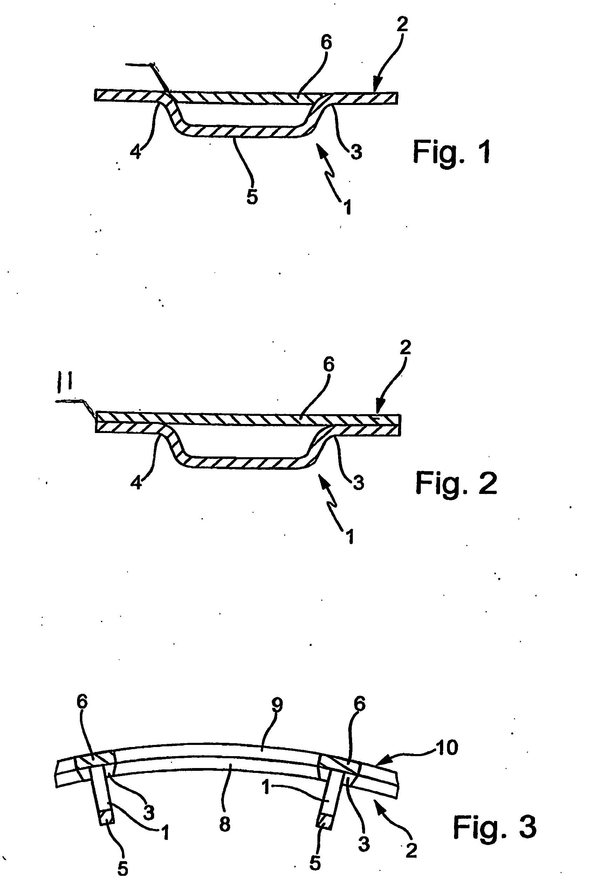

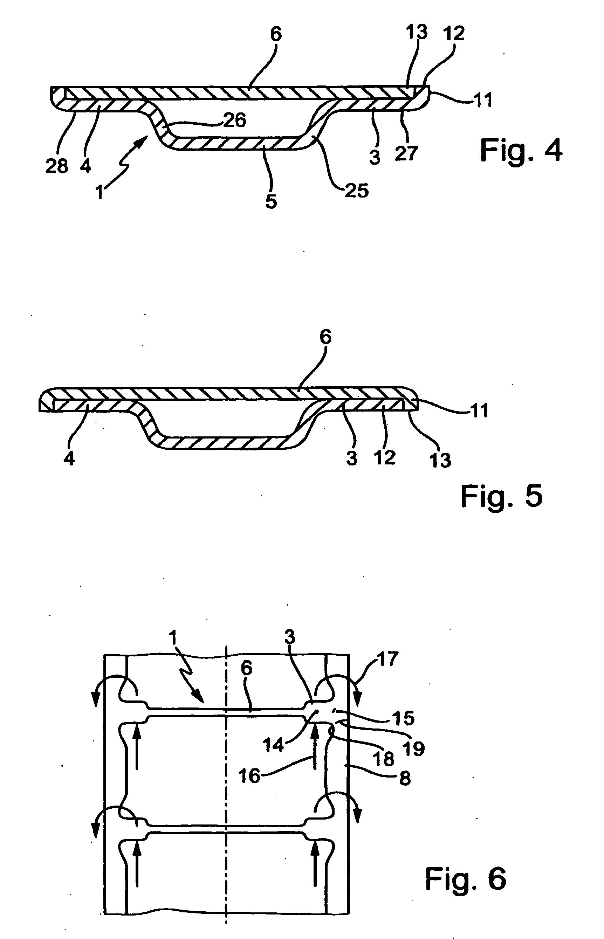

Fig. 1 zeigt einen Radialschnitt entlang eines Steges 1 eines Käfigs 2, wobei der Steg 1 einen ersten Stegteil 3, einen zweiten Stegteil 4 und einen mit den beiden Stegteilen 3, 4 verbundenen, bezüglich der beiden Stegteile 3, 4 radial versetzten mittleren Stegteil 5 umfasst. Die beiden Stegteile 3, 4 und der mittlere Stegteil 5 ist mit nicht dargestellten Seitenringen des Käfigs 2 und dem übrigen Korpus des Käfigs 2 einstückig nach einem Umformverfahren hergestellt, wobei bei der Durchführung des Umformverfahrens zu beachten ist, dass die Erstreckung des mittleren Stegteil 5 in einer Richtung senkrecht zu der Zeichenebene nicht geringer als die Breite des Korpus des Käfigs 2, beispielsweise im Bereich der Stegteile 3, 4, sein sollte. Die Stegteile 3, 4 weisen jeweils einen auf das mittlere Stegteil 5 hin abgestellten Abschnitt 25, 26 (Fig. 4) auf. Das mittlere Stegteil 5 ist an den abgestellten Abschnitten 25, 26 an den Stegteilen 3, 4 befestigt und geht insbesondere in die Stegteile 3, 4 über.

Es ist ein Stützelemente 6 vorgesehen, das das erste Stegteil 3 und das zweite Stegteil 4 versteift und die beiden Seitenringe verbindet. Die Stützwirkung des Stützelementes 6 für die beiden Stegteile 3, 4 besteht darin, dass das Stützelement 6 ein Aufliegen der beiden Stegteile 3, 4 unter Einwirkung einer in der Zeichenebene von unten wirkenden Kraft unterdrückt. Das Stützelement 6 ist in einer gedachten Verlängerung der beiden Stegteile 3, 4 angeordnet und an den beiden Stegteilen 3, 4 mittels einer Punktschweißung befestigt.

Zwischen dem Stützelement 6 und dem mittleren Stegteil 5 ist ein nicht dargestellter Fettvorrat vorgesehen. Das Stützelement 6 ist parallel zu dem mittleren Stegteil 5 ausgerichtet.

Fig. 2 zeigt einen Steg 1 eines Käfigs 2, wobei der Steg 1 ein erstes Stegteil 3, ein zweites Stegteil 4 und ein zwischen den beiden Stegteile, 3, 4 angeordnetes, mit diesen verbundenes und bezüglich der beiden Stegteile 3, 4 radial versetztes mittleres Stegteil 5 umfasst.

Dem Steg 1 ist ein Stützteil 6 zugeordnet, das an der nach außen weisenden Mantelfläche des Korpus des Käfigs 2 angeordnet ist und das an den beiden Stegteilen 3, 4 mittels Punktschweißung befestigt ist. Das Stützteil 6 ist parallel zu dem mittleren Stegteil 5, allerdings nicht mehr in der Flucht der beiden Stegteile 3, 4 angeordnet.

Fig. 3 zeigt den Ausschnitt des Käfigs aus Fig. 2 in einer Schnittansicht, deren Schnittebene in die Teilkreisebene, Im wesentlichen also zwischen die beiden Seitenringe, gelegt ist. Die Schnittebene schneidet zwei Stege 1 jeweils im Bereich der mittleren Stegteile 5 und der Versteifungselemente 6. Im Bereich der beiden ersten Stegteile 3 der beiden Stege 1 sind angeschrägte Anlaufflächen erkennbar, an denen zwischen den stege 1 aufgenommene Wälzkörper anliegen. Die Wälzkörper stehen nicht in Kontakt mit dem jeweiligen Stützelement 6. Die Stege 1 und die Anlaufflächen sind einteilig mit dem ersten Seitenring 8. Die beiden Stützelemente 6 sind über Verbindungselemente 9 zu einem Stützkäfig 10 verbunden, der sich über die beiden bildlich dargestellten Stege 1 hinaus entlang des Umfangs des Käfigs 2 erstreckt und diesen manschettenartig umgibt.

Der Stützkäfig 10 ist mit dem Käfig 2 mittels Punktschweißungen verbunden. Der Stützkäfig 10 ist bezogen auf den Käfig 2 so ausgelegt und bemessen, dass bei Betrieb eine Außenbordführung des Käfigs 2 ermöglicht wird.

Fig. 4 zeigt einen Steg 1 eines nicht näher dargestellten Käfigs mit einem Stützelement 6, das Teil eines den Käfig abstützenden Stützkäfigs ist. Das Stützelement 6 ist mittels einer Umbördelung 11 an dem Seitenring mit den Stegteilen 3, 4 festgelegt. Die Umbördelung 11 ist derart ausgebildet, dass eine Randkante 12 des ersten Stegteils 3 um ca. 90° axial in Richtung auf das Stützelement 6 hin so umgelegt wird, dass die Randkante 12 eine Randkante 13 des Stützteils 6 des Stützkäfigs übergreift. Der Endabschnitt der Randkante 12 des ersten Stegteils 3 schließt dabei im wesentlichen bündig mit der durch das Stützelement 6 definierten Ebene ab.

Auf entsprechende Weise ist eine Umbördelung zur Festlegung des Stützelementes 6 im Bereich des zweiten Stegteils 4 vorgesehen.

Fig. 5 zeigt einen Steg 1 eines nicht näher dargestellten Käfigs mit einem Stützelement 6, das Teil eines den Käfig abstützenden Stützkäfigs ist. Das Stützelement 6 ist ebenfalls mittels einer Umbördelung 11 an dem Seitenring mit den Stegteile 3, 4 festgelegt. Die Umbördelung 11 ist derart ausgestaltet, dass eine Randkante 13 des Stützelementes 6 axial in Richtung des ersten Stegteils 3 so umgelegt wird, dass die Randkante 13 eine Randkante 12 des ersten Stegteils 3 übergreift.

Entsprechend ist eine weitere Umbördelung zur Festlegung des Stegteils 6 des Stützkäfigs im Bereich des zweiten Stegteils 4 vorgesehen.

Die in dem vorstehend beschriebenen dritten und vierten Ausführungsbeispiel jeweils vorgesehen Umbördelung 11 war so ausgebildet, dass die Randkante 12, 13 des ersten Stegteils 3 bzw. des Stützelementes 6 jeweils einmal um ca. 90° umgelegt wurde. Es versteht sich, dass die jeweilige Randkante 12, 13 auch um zweimal ca. 90° umgelegt sein kann, so dass die jeweils andere Randkante eingefasst wird.

Bei den in den vorstehend beschriebenen dritten und vierten Ausführungsbeispielen vorgesehenen Umbördelungen 11 war jeweils vorgesehen, dass die umgelegte Randkante 12, 13 die umgriffene Randkante 13, 12 entlang der gesamten axialen Erstreckung übergreift. Es versteht sich, dass es ausreichend ist, wenn die umgelegte Randkante 12, 13 die übergriffene Randkante 13, 12 jeweils nur entlang eines Teils der axialen Erstreckung übergreift.

Bei den oben beschriebenen dritten und vierten Ausführungsbeispielen war die Umbördelung 11 jeweils als den Stützkäfig vollständig umlaufende Umlegung einer Randkante 12, 13 ausgebildet. Es versteht sich, dass in den Stützkäfig Laschen oder Zungen eingeschnitten sein können, die umgelegt werden, so dass die Umbördelung 11 entlang des Umfangs des Stützkäfigs nur abschnittsweise vorgesehen ist.

Fig. 6 zeigt als fünftes Ausführungsbeispiel eine abschnittsweise Draufsicht auf einen Stützkäfig 10, der als gestanzter Bandabschnitt ausgebildet ist. Im Bereich des ersten Stegteils 3 des Stegelementes ist das Stützteil 6 mittels einer Punktschweißung 14 an dem ersten Stegteil 3 und damit an dem Seitenring 8 des Käfigs festgelegt. Bezogen auf die bei Betrieb des Käfigs auftretenden Kräfte (Pfeil 16) durch die Wälzkörper ist die Stelle der Punktschweißung 14 so gelegt, dass die Punktschweißung 14 in der Verlängerung der in den Käfig bzw. in den Stützkäfig eingeleiteten Kräfte liegt. Eine andere Wahl der Stelle für die Punktschweißung, etwa die Stelle 15 außerhalb des Steges 1 im Bereich des Seitenrings 8 des Käfigs, führt bei der Krafteinleitung (Pfeil 16) zu einem Drehmoment um den Punkt 15 (Pfeil 17), das die Verbindung zwischen dem Käfig und dem Stützkäfig löst. Weiter bewirkt das Drehmoment (Pfeil 17) das Auftreten von Spannungen, die insbesondere im Bereich einer Einkerbung 18 nahe des Übergangs von dem Steg 1 zu dem Seitenring 8 Risse 19 verursachen kann.

Im Bereich der Stelle 15 kann eine Fügung ausgebildet sein, beispielsweise eine Verprägung, speziell eine Clinchniet, die eine im wesentlichen linienhafte Ausdehnung in Richtung des Stützelementes 6 aufweist und Drehmomente (Pfeil 17) besser aufnehmen kann.

Ergänzend zu oder anstelle der Punktschweißung 14 ist daher eine Verprägung, speziell eine Clinchniet, an der Fügestelle 15 vorgesehen.

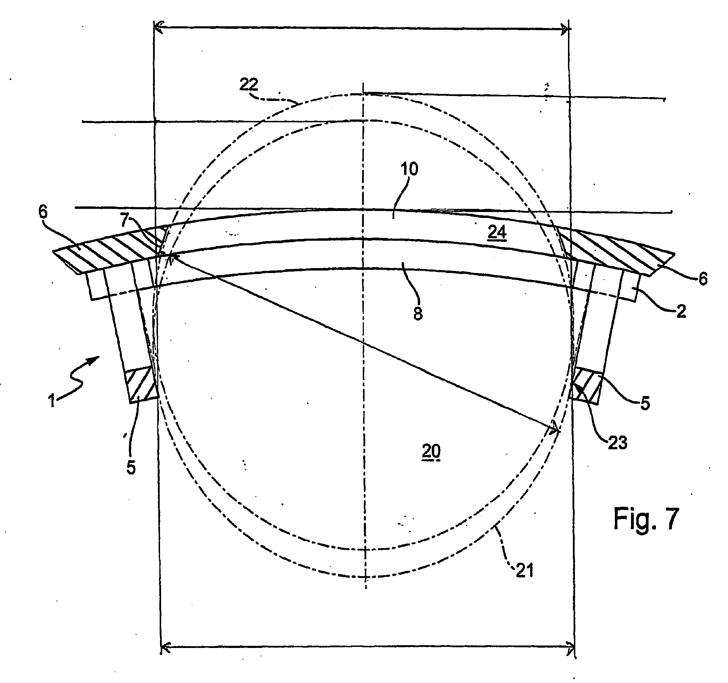

Fig. 7 zeigt ein sechstes Ausführungsbeispiel eines Käfigs mit einem Seitenring 8 und einem Stützkäfig 10, der Stützelemente 6 im Bereich der Taschen aufweist. Die Schnittebene ist so gelegt, dass das mittlere Stegteil 5 sowie das Stützelement 6 des Stegs 1 als Schnittflächen erkennbar sind.

Dargestellt ist ein Wälzkörper 20, und zwar in einer Einführstellung (Stellung 21), in der der Wälzkörper 20 an Haltenasen 23 anliegt, die an dem mittleren Stegteil 5 ausgebildet sind. Das mittlere Stegteil 5 ermöglicht damit eine selbsthaltende Funktion für den mit den Wälzkörpern 20 bestückten Käfig 2, auch wenn der Käfig 2 außerhalb des Teilkreises vorgesehen ist. Insbesondere sind keine zusätzlichen Hilfsmittel erforderlich, um die eingeführten Wälzkörper 20 in dem Käfig 2 abzustützen.

In der Betriebsstellung (Stellung 22) der Wälzkörper 20 liegt dieser nicht mehr an den Haltenasen 23 an, sondern an Anlaufflächen 7, die im Bereich des Stützelementes 6 an dem Stützkäfig 10 vorgesehen sind. Die Anlaufflächen 7 sind als im wesentlichen angeschrägte Flächenabschnitte des auf die Tasche weisenden Abschnitts des Stützelementes 6 des Stützkäfigs 10 ausgebildet. Bei dem oben beschriebenen zweiten Ausführungsbeispiel waren dagegen die Anlaufflächen 7 an dem Seitenring 8 des Käfigs 2 angeordnet. In der Betriebsstellung werden in den Käfig 2 durch die Wälzkörper 20 unmittelbar keine Kräfte eingeleitet; die Krafteinleitung geschieht daher in den Stützkäfig 10 im Bereich der Anlaufflächen 7 des Stützelementes 6.

Der Stützkäfig 10 entlastet daher den Käfig 2, der insbesondere im Bereich der Stege 1 mit so schmaler Stegbreite ausgebildet ist, dass das mittlere Stegteil 5 die in der Einführstellung eingefederten Wälzkörper 20 leicht aufnehmen kann.

Fig. 7 zeigt weiter ein Verbindungselement 24 des Stützkäfigs 10, das zwei benachbarte, die Tasche ausbildende Stützelemente 6 des Stützkäfigs 10 fest verbindet. Das Verbindungselement 24 ist auf dem Seitenring 8 des Käfigs 2 aufgelegt und an diesem befestigt.

Bei den vorstehend beschriebenen Ausführungsbeispielen war der Raum zwischen dem Stützelement 6 und dem mittleren Stegteil 5 freigelassen und konnte einen Fettvorrat enthalten. Es versteht sich, dass das Stützelement 6 auch eine Auskragung in Richtung auf das mittlere Stegteil 5 aufweisen kann. Ebenfalls können zusätzliche verstärkende Elemente zwischen dem mittleren Stegteil 5 und dem Stützelement 6 vorgesehen sein.

Alternativ zu dem vorbeschriebenen zweiten Ausführungsbeispiel kann an der äußeren Mantelfläche des Stützkäfigs 10 eine reibungsmindemde Beschichtung bzw. reibungsmindernde Elemente als Hilfe zum Gleiten angebracht werden; die reibungsmindernden Elemente können nach Art von Clips angeordnet und mit einer nach außen weisenden reibungsmindernden Beschichtung versehen sein.

Bei den oben beschriebenen zweiten bzw. sechsten Ausführungsbeispiel waren jeweils Anlaufflächen 7 vorgesehen, die an dem Käfig 2 (zweites Ausführungsbeispiel) bzw. an dem Stützkäfig 10 (sechstes Ausführungsbeispiel) vorgesehen waren, und die jeweils als angeschrägte, im wesentlichen ebene Flächen ausgebildet waren, die mit der zylindrischen Außenkontur des Wälzkörpers 20 im wesentlichen einen Linienkontakt ausbilden. Es versteht sich, dass die Anlaufflächen 7 an dem Käfig 2 und dem Stützkäfig 10, vorgesehen sein können. Es versteht sich weiter, dass die Anlaufflächen ein gekrümmtes Profil aufweisen können, beispielsweise kann eine Formgebung vorgesehen sein, die im wesentlichen komplementär zu der Form der Wälzkörper 20 ist, so dass sich Führungsflächen ausbilden und eine leichtere, Führung der Wälzkörper 20 möglich wird und die Anlaufflächen 7 mit nur geringer Fläche ausgebildet sind.

Die Erfindung wurde vorstehend anhand von Ausführungsbeispielen beschrieben, die ein U- bzw. ein M-Profil als Stegausgestaltung aufwiesen. Es versteht sich, dass die Erfindung auch auf andere Stegausgestaltungen anwendbar ist.

Bei den vorstehend beschriebenen Ausführungsbeispielen war das Stützelement 6 des Steges 1 jeweils an den im wesentlichen zu dem mittleren Stegteil 5 parallelen Abschnitten 27, 28 (Fig. 4) der Stegteile 3, 4 befestigt. Es versteht sich, das das Stützelement alternativ oder ergänzend hierzu auch an den abgestellten Abschnitten 25, 26 der Stegteile 3, 4 befestigt sein kann; insbesondere kann vorgesehen sein, dass das Stützelement 6 an dem mittleren Stegteil 5 befestigt ist und damit die beiden Stegteile 3, 4 abstützt und verbindet.

### Bezugszeichenliste

- 1: Steg
- 2: Käfig
- 3: erstes Stegteil
- 4: zweites Stegteil
- 5: mittleres Stegteil
- 6: Stützelement
- 7: Anlauffläche
- 8: erster Seitenring
- 9: Verbindungselement
- 10: Stützkäfig
- 11: Umbördelung
- 12: Randkante erstes Stegteil 3
- 13: Randkante Stützelement 6
- 14: Punktschweißung
- 15: Fügestelle
- 16: Pfeil (Krafteinleitung)
- 17: Pfeil (Drehmoment)
- 18: Einkerbung
- 19: Riß
- 20: Wälzkörper
- 21: Wälzkörper in der Einführstellung
- 22: Wälzkörper in der Betriebsstellung
- 23: Haltenase
- 24: Verbindungselement
- 25: abgestellter Abschnitt des ersten Stegteils 3
- 26: abgestellter Abschnitt des zweiten Stegteils 4
- 27: paralleler Abschnitt des ersten Stegteils 3
- 28: paralleler Abschnitt des zweiten Stegteils 4

## Patentansprüche

1. Käfig für Wälzkörper eines Wälzlagers, umfassend
einen ersten Seitenring (8),
einen von dem ersten Seitenring axial beabstandeten zweiten Seitenring, und
mindestens zwei Stege (1), die den ersten Seitenring (1) mit dem zweiten Seitenring verbinden und untereinander eine Tasche für einen der Wälzkörper ausbilden,
wobei mindestens einer der Stege (1) ein erstes, an dem ersten Seitenring (8) angeordnetes Stegteil (3) und ein zweites, an dem zweiten Seitenring angeordnetes Stegteil (4) sowie ein mittleres, bezogen auf das erste und das zweite Stegteil (3, 4) versetztes Stegteil (5) umfasst,
wobei die Wälzkörper an den beiden ersten Stegteilen (3, 4) außerhalb des Teilkreises und an dem mittleren Stegteil (5) innerhalb des Teilkreises anliegen,
**dadurch gekennzeichnet,**
**dass** ein Stützelement (6) vorgesehen ist, das das erste Stegteil (3) und das zweite Stegteil abstützt (4) und die beiden Seitenringe (8) verbindet.

2. Käfig nach Anspruch 1, **dadurch gekennzeichnet, dass** das Stützelement (6) mindestens abschnittsweise parallel zu dem mittleren Stegteil (5) ausgerichtet ist.

3. Käfig nach Anspruch 1 oder 2, **dadurch gekennzeichnet, dass** eine Breite des Stützelement (6) in dem Bereich zwischen den beiden, an den Seitenringen (8) angeordneten Stegteilen (3, 4) größer ist als die Breite des mittleren Stegteils (5).

4. Käfig nach einem der Ansprüche 1 bis 3, **dadurch gekennzeichnet, dass** das Stützelement (6) mittels einer Umbördelung (11) an einem der Seitenringe (8) festgelegt ist.

5. Käfig nach einem der Ansprüche 1 bis 4, **dadurch gekennzeichnet, dass** das Stützelement (6) mittels einer Schweißung, insbesondere einer Punktschweißung (14), an mindestens einem der beiden, an den Seitenringen (8) angeordneten Stegteile (3, 4) festgelegt ist.

6. Käfig nach einem der Ansprüche 1 bis 5, **dadurch gekennzeichnet, dass** das Stützelement (6) mittels einer Verprägung (15) an dem Seitenring (8) festgelegt ist.

7. Käfig nach einem der Ansprüche 1 bis 6, **dadurch gekennzeichnet, dass** im Bereich der an den Seitenringen (8) angeordneten Stegteile (3, 4) Anlaufflächen (7) vorgesehen sind.

8. Käfig nach einem der Ansprüche 1 bis 7, **dadurch gekennzeichnet, dass** im Bereich des Stützelementes (6) Anlaufflächen (7) vorgesehen sind.

9. Käfig nach einem der Ansprüche 1 bis 8, **dadurch gekennzeichnet, dass** der Käfig (2) mindestens zwei Stützelemente (6) umfasst, und dass je zwei benachbarte Stützelemente (6) zu einem Rahmen zusammengefasst sind, der eine Tasche des Käfigs umgibt.

10. Käfig nach Anspruch einem der Ansprüche 1 bis 8, **dadurch gekennzeichnet, dass** jeder der Stege (1) des Käfigs (2) ein Stützelement (6) umfasst, und dass die Stützelemente (6) zu einem den Käfig (2) umgebenden Stützkäfig (10) zusammenfasst sind, dessen jeweiliges Fenster einer der Taschen des Käfigs (2) zugeordnet ist.

11. Käfig nach Anspruch 10, **dadurch gekennzeichnet, dass** ein axialer Abstand zwischen den gegenüberliegenden Kanten des Fensters des Stützkäfigs (10) geringer ist als ein axialer Abstand zwischen dem ersten und dem zweiten Stützring im Bereich der Taschen.

12. Käfig nach einem der Ansprüche 1 bis 11, **dadurch gekennzeichnet, dass** das Stützelement (6), der Rahmen oder der Stützkäfig (10), aus einem faserverstärkten Kunststoff ausgebildet ist.

13. Käfig nach einem der Ansprüche 10 bis 12, **dadurch gekennzeichnet, dass** eine Materialdicke der Seitenringe (8) und eine Materialdicke des Stützkäfigs (10) derart aufeinander abgestimmt sind, dass der Stützkäfig (10) eine Außen- oder Innenbordführung des Käfigs (2) ermöglicht.

14. Käfig nach einem der Ansprüche 10 bis 12, **dadurch gekennzeichnet, dass** an der äußeren Mantelfläche des Stützkäfigs (10) abschnittsweise eine ein Gleiten des Stützkäfigs (10) erleichternde Hilfe vorgesehen ist.

15. Käfig nach einem der Ansprüche 1 bis 14, **dadurch gekennzeichnet, dass** ein Fettvorrat zwischen dem mittleren Stegteil (5) und dem Stützelement (6) vorgesehen ist.

## Claims

1. Cage for rolling bodies of a rolling bearing, comprising
a first side ring (8),
a second side ring which is axially spaced apart from the first side ring, and
at least two webs (1) which connect the first side ring (1) to the second side ring and which between them form a pocket for one of the rolling bodies, with at least one of the webs (1) comprising a first web part (3), which is arranged on the first side ring (8), and a second web part (4), which is arranged on the second side ring, and also a middle web part (5), which is offset in relation to the first and second web parts (3, 4),
with the rolling bodies bearing on the two first web parts (3, 4) outside the pitch circle and on the middle web part (5) inside the pitch circle,
**characterized**
**in that** a support element (6) is provided which supports the first web part (3) and the second web part (4) and connects the two side rings (8).

2. Cage according to Claim 1, **characterized in that** the support element (6) is aligned parallel to the middle web part (5) at least in sections.

3. Cage according to Claim 1 or 2, **characterized in that** a width of the support element (6) in the region between the two web parts (3, 4) arranged on the side rings (8) is greater than the width of the middle web part (5).

4. Cage according to one of Claims 1 to 3, **characterized in that** the support element (6) is fixed to one of the side rings (8) by means of a flanged portion (11).

5. Cage according to one of Claims 1 to 4, **characterized in that** the support element (6) is fixed to at least one of the two web parts (3, 4) arranged on the side rings (8) by means of a weld, in particular a spot weld (14).

6. Cage according to one of Claims 1 to 5, **characterized in that** the support element (6) is fixed to the side ring (8) by means of an embossing (15).

7. Cage according to one of Claims 1 to 6, **characterized in that** run-on surfaces (7) are provided in the region of the web parts (3, 4) arranged on the side rings (8).

8. Cage according to one of Claims 1 to 7, **characterized in that** run-on surfaces (7) are provided in the region of the support element (6).

9. Cage according to one of Claims 1 to 8, **characterized in that** the cage (2) comprises at least two support elements (6), and **in that** in each case two adjacent support elements (6) are combined to form a frame which surrounds a pocket of the cage.

10. Cage according to one of Claims 1 to 8, **characterized in that** each of the webs (1) of the cage (2) comprises a support element (6), and **in that** the support elements (6) are combined to form a support cage (10) which surrounds the cage (2) and whose respective window is assigned to one of the pockets of the cage (2).

11. Cage according to Claim 10, **characterized in that** an axial spacing between the opposite edges of the window of the support cage (10) is smaller than an axial spacing between the first and second support rings in the region of the pockets.

12. Cage according to one of Claims 1 to 11, **characterized in that** the support element (6), the frame or the support cage (10) is formed from a fiber-reinforced plastic.

13. Cage according to one of Claims 10 to 12, **characterized in that** a material thickness of the side rings (8) and a material thickness of the support cage (10) are coordinated with one another such that the support cage (10) permits external or internal rim guidance of the cage (2).

14. Cage according to one of Claims 10 to 12, **characterized in that** an aid which facilitates sliding of the support cage (10) is provided in sections on the outer lateral surface of the support cage (10).

15. Cage according to one of Claims 1 to 14, **characterized in that** a grease reserve is provided between the middle web part (5) and the support element (6).

## Revendications

1. Cage pour des corps de roulement d'un palier à roulement, comportant
une première bague latérale (8),
une deuxième bague latérale espacée axialement de la première bague latérale, et
au moins deux nervures (1) qui relient la première bague latérale (1) à la deuxième bague latérale et réalisent conjointement une cavité pour l'un des corps de roulement,
au moins l'une des nervures (1) comportant une première partie de nervure (3) disposée sur la première bague latérale (8) et une deuxième partie de nervure (4) disposée sur la deuxième bague latérale ainsi qu'une partie de nervure centrale (5) décalée par rapport à la première et à la deuxième partie de nervure (3, 4),
les corps de roulement s'appliquant contre les deux premières parties de nervure (3, 4) à l'extérieur du cercle primitif et s'appliquant contre la partie de nervure centrale (5) à l'intérieur du cercle primitif,
**caractérisée**
**en ce qu'**un élément de support (6) est prévu, lequel supporte la première partie de nervure (3) et la deuxième partie de nervure (4) et relie les deux bagues latérales (8).

2. Cage selon la revendication 1, **caractérisée en ce que** l'élément de support (6) est orienté parallèlement à la partie de nervure centrale (5) au moins dans certaines sections.

3. Cage selon la revendication 1 ou 2, **caractérisée en ce qu'**une largeur de l'élément de support (6) dans à région entre les deux parties de nervure (3, 4) disposées sur les bagues latérales (8) est supérieure à la largeur de la partie de nervure centrale (5).

4. Cage selon l'une quelconque des revendications 1 à 3, **caractérisée en ce que** l'élément de support (6) est fixé à l'une des bagues latérales (8) au moyen d'un bord rabattu (11).

5. Cage selon l'une quelconque des revendications 1 à 4, **caractérisée en ce que** l'élément de support (6) est fixé à au moins l'une des deux parties de nervure (3, 4) disposées sur les bagues latérales (8) au moyen d'une soudure, en particulier d'une soudure par points (14).

6. Cage selon l'une quelconque des revendications 1 à 5, **caractérisée en ce que** l'élément de support (6) est fixé à la bague latérale (8) au moyen d'un estampage (15).

7. Cage selon l'une quelconque des revendications 1 à 6, **caractérisée en ce que** des surfaces de butée (7) sont prévues dans la région des parties de nervure (3, 4) disposées sur les bagues latérales (8).

8. Cage selon l'une quelconque des revendications 1 à 7, **caractérisée en ce que** des surfaces de butée (7) sont prévues dans la région de l'élément de support (6).

9. Cage selon l'une quelconque des revendications 1 à 8, **caractérisée en ce que** la cage (2) comporte au moins deux éléments de support (6), et **en ce que** deux éléments de support (6) adjacents respectifs sont réunis pour former un cadre qui entoure une cavité de la cage.

10. Cage selon l'une quelconque des revendications 1 à 8, **caractérisée en ce que** chacune des nervures (1) de la cage (2) comporte un élément de support (6), et **en ce que** les éléments de support (6) sont réunis pour former une cage de support (10) entourant la cage (2), la fenêtre respective de la cage de support étant associée à l'une des cavités de la cage (2).

11. Cage selon la revendication 10, **caractérisée en ce qu'**une distance axiale entre les bords opposés de la fenêtre de la cage de support (10) est inférieure à une distance axiale entre la première et la deuxième cage de support dans la région des cavités.

12. Cage selon l'une quelconque des revendications 1 à 11, **caractérisée en ce que** l'élément de support (6), le cadre ou la cage de support (10) est réalisé(e) à partir d'un plastique renforcé par des fibres.

13. Cage selon l'une quelconque des revendications 10 à 12, **caractérisée en ce qu'**une épaisseur de matériau des bagues latérales (8) et une épaisseur de matériau de la cage de support (10) sont adaptées l'une à l'autre de telle sorte que la cage de support (10) permette un guidage de bord extérieur ou intérieur de la cage (2).

14. Cage selon l'une quelconque des revendications 10 à 12, **caractérisée en ce qu'**un auxiliaire facilitant un glissement de la cage de support (10) est prévu, dans certaines sections, sur la surface d'enveloppe extérieure de la cage de support (10).

15. Cage selon l'une quelconque des revendications 1 à 14, **caractérisée en ce qu'**une réserve de graisse est prévue entre la partie de nervure centrale (5) et l'élément de support (6).
